# EUROPEAN PATENT SPECIFICATION

(11) **EP 2 961 784 B1**
(45) Date of publication and mention of the grant of the patent: **25.10.2017**
(21) Application number: 14706824.1
(22) Date of filing: 26.02.2014
(51) Int. Cl.: C08G 59/18

(54) **COMPOSITION AND METHOD OF MAKING WATER BORNE EPOXY HARDENER FOR USE IN TWO-COMPONENT EPOXY SELF LEVELLING COMPOUNDS WITH LONG POT LIFE, FAST CURE AND LOW SHRINKAGE CHARACTERISTICS**
ZUSAMMENSETZUNG UND VERFAHREN ZUR HERSTELLUNG EINES WÄSSRIGEN EPOXIDHARZHÄRTERS ZUR VERWENDUNG IN SELBSTNIVELLIERENDEN ZWEIKOMPONENTEN-EPOXIDVERBINDUNGEN MIT LANGER TOPFZEIT, SCHNELLEN HÄRTUNGS- UND GERINGEN SCHRUMPFUNGSMERKMALEN
COMPOSITION ET PROCÉDÉ DE FABRICATION D'UN DURCISSEUR ÉPOXY AQUEUX DESTINÉ À ÊTRE UTILISÉ DANS DES COMPOSÉS DE NIVELLEMENT AUTOMATIQUE ÉPOXY À DEUX COMPOSANTS AVEC DES CARACTÉRISTIQUES LONGUE DURÉE DE VIE EN POT, À DURCISSEMENT RAPIDE ET FAIBLE RÉTRÉCISSEMENT

(30) Priority: 01.03.2013 EP 13157483
(43) Date of publication of application: 06.01.2016
(73) Proprietor: Sika Technology AG, 6340 Baar (CH)
(72) Inventor: LIU, Shuyuan, B29 4BY Birmingham (GB); CARTER, Neil, Southport PR8 5SQ (GB); MARTIN, Ian, Barrow BB7 9UN (GB); EVANS, Craig, Farnworth Bolton BL4 7SS (GB)
(74) Representative: Sika Patent Attorneys
(86) International application number: PCT/EP2014/053683
(87) International publication number: WO 2014/131780

(56) References cited:
- EP-A1- 1 136 509
- EP-A2- 0 387 418
- EP-A2- 1 266 920
- US-A- 5 489 630

## Description

The present invention is directed to a water-reducible curing agent for epoxy resins, obtainable by reacting at least one diprimary amine, at least one mono-primary amine and at least one polyepoxy compound, wherein the molar ratio of the primary amino groups to the epoxy groups in the reaction is in the range of about 1.7:1 to 1:1, the ratio of the primary amines in the diprimary amine to secondary amines optionally present in the diprimary amine is more than 1:1, and the molecular weight (Mw) of the diprimary amine is 500 Daltons or less. The present invention is further directed to the use of a water-dispersible curing agent as described above as a curing agent for epoxy resins, in particular for water-based self-levelling epoxy resin formulations, to a process for coating a substrate utilizing said curing agent and surfaces with an epoxy resin coating obtainable by such a process.

### State of the Art

In the state of the art, numerous approaches have been described to provide water-dispersible curing agents for epoxy resins. For example, in EP 1 454 935 A1, Mannich-based adducts in the form of the reaction products of 2,4,6-tris(dimethylaminomethyl)-phenols and diprimary amines such as 1-amino-3-aminomethyl-3,5,5-trimethylcyclohexane (IPDA) or polyalkoxyalkylenediamines from the JEFFAMINE series had been prepared and were successfully used as curing agents for epoxy resins in concrete applications. Polyether amines such as those of the JEFFAMINE series have also been described as such for the curing of epoxy resins e.g. in EP 0 567 831 A1.

In yet another approach, hardeners comprising pyrrol residues were used as curing agents for epoxy resins and had been demonstrated to have particular utility in epoxy cement concrete (ECC) compositions (cf. EP 2 133 381 A1).

US 5,246,984 describes polyepoxide coating systems cured with polyamine epoxy adduct curatives employing diprimary amines such as triethylenetetraamine, tetraethylenepentaamine and higher molecular weight homologues thereof wherein a monoepoxide is added in a proportion to react with at least part of the primary amine groups. Subsequently, polyepoxides are added to react with up to 65% of the remaining primary amine groups. In the Examples of this document, it was demonstrated that the inventive compositions provided suitable pot life times in the range of hours, and a tack-free time of within 90 to 120 minutes.

EP 0 387 418 describes curing agents for epoxy resins wherein polyalkylene polyether monoamines and/or diamines are reacted with di- or polyepoxy compounds to provide an intermediate product having a ratio of hydrogens bound to nitrogen and capable of reacting with epoxy groups to epoxy groups of 1: 1.4 to 6. The intermediate product is then reacted with a primary or secondary amine in a ratio of epoxy groups to hydrogen atoms bound to nitrogen of 1:2 to 1:10. An example of EP 0 387 418 describes the reaction product of Jeffamine 600, bisphenol A diglycidyl ether and isophorone diamine, wherein the molar ratio of the amino groups to the epoxy groups is about 4:1.

US 5,489,630 describes a self-emulsifying epoxy curing agent, which is the reaction product of a poly(alkylene oxide) monoamine or diamine with a di- or polyepoxide, wherein the ratio of epoxide groups to active amine hydrogens is 1.1:1 to 6:1. This intermediate product is then reacted with a di-or polyamine at a ratio of active amine hydrogens to epoxide groups of greater that about 25:1. The two latter documents thus employ relatively high amine to epoxy ratios.

Self-levelling floors are an important application of epoxide coatings in that they provide thin coatings of high hardness and wear resistance. In this type of applications, polyethylene diamines and polypropylene/polyethylene oxide-based diamines have been described as curing agents. However, these components lead to a high tension network after reacting with epoxies and cause shrinking as a consequence. The available self-levelling epoxy based coatings thus require further improvement.

Despite of recent advancements in technology, there remains a need for epoxy hardening systems and water-dispersible curing agents for epoxy resins which are easy to mix, have a suitable pot life in the range of about up to 1 h, and provide a high hardness in the cured epoxy materials. In addition, the final coatings should exhibit low shrinkage, and preferably low odour and colour or non-transparent appearance so that they can be used for transparent coatings without changing the base colour of the material to which they are applied.

The curing agents should preferably further exhibit a low viscosity, excellent workability and display a suitable pot life. Moreover the curing agents should provide fast cure and excellent final properties in two component epoxy/ concrete systems. Finally, they should preferably provide good adhesion on concrete, good impact resistance, good water vapour transmission and excellent compressive strength.

The present application addresses these needs.

### Description of the Invention

The present application pertains to a water-reducible curing agent for epoxy resins, obtainable by reacting at least one diprimary amine, at least one mono-primary amine and at least one polyepoxy compound, wherein the molar ratio of the primary amino groups to the epoxy groups in the reaction is in the range of about 1.7:1 to 1.1, the ratio of the primary amines in the diprimary amine to secondary amines optionally present in the diprimary amine is more than 1:1 and the molecular weight (Mw) of the diprimary amine is 500 Daltons or less.

A diprimary amine as this term is used in the context of the present invention means an amine having two primary amine moieties (NH₂). Similarly, a monoprimary amine means an amine having a single primary amine moiety.

Water-reducible in the context of the present invention means, that the material can be diluted with water or a water/co-solvent mixture to provide a homogeneous mixture.

This water reducible curing agent is in particular suitable for non-cementious and cementious self levelling floors and tile grout.

It had been observed, that high molecular weights of the diprimary amine lead to a higher amount of shrinkage. Thus, the molecular weight (Mw) of the diprimary amines in the practice of the present application should be 500 Dalton or less. It is preferred, that the molecular weight (Mw) of the diprimary amine is 400 or less, more preferably 300 or less and most preferably 200 or less. The Mw as used above applies to compounds which have two primary amine functionalities attached to a backbone comprising repeating units. It is noted however, that repeating units in the backbone are not required in the diprimary amine of the present invention. The molecular weight of the diprimary amines of the present invention is determined by conventional techniques, such as electrospray mass spectrometry.

It is preferred, that the molar ratio of the primary amino groups to the epoxy groups in the reaction providing the water-reducible curing agent is about 1.5:1 or less and more preferably about 1.4:1 or less. In addition, it is preferred that the molar ratio of the primary amino groups to the epoxy groups employed in the reaction is more than or equal to about 1.05:1, or preferably more than or equal to about 1.1:1 and most preferably more than or equal to about 1.2:1.

Except for the above mentioned parameters and conditions, the diprimary amine for use as a component for the preparation of the water-reducible curing agent is not subject to any relevant restrictions. In particular suitable are however aliphatic, cycloaliphatic or arylaliphatic diamines, in particular ethylene diamine, 1,2-propandiamine, 1,3-propandiamine, 2-methyl-1,2-propandiamine, 2,2-dimethyl-1,3-propandiamine, 1,3-butandiamine, 1,4-butandiamine, 1,3-pentandiamine (DAMP), 1,5-pentandiamine, 1,5-diamino-2-methylpentan (MPMB), 2-butyl-2-ethyl-1,5-pentandiamine (C11-neodiamine), 1,6-hexandiamine, 2,5-dimethyl-1,6-hexandiamine, 2,2,4- und 2,4,4-trimethylhexamethylendiamine (TMD), 1,7-heptandiamine, 1,8-octandiamine, 1,9-nonandiamine, 1,10-decandiamine, 1,11-undecandiamine, 1,12-dodecandiamine, 1,2-, 1,3- and 1,4-diaminocyclohexane, bis-(4-aminocyclohexyl)-methane (H12-MDA), bis-(4-amino-3-methylcyclohexyl)-methan, bis-(4-amino-3-ethylcyclohexyl)-methane, bis-(4-amino-3,5-dimethylcyclohexyl)-methane, bis-(4-amino-3-ethyl-5-methylcyclohexyl)-methane (M-MECA), 1-amino-3-aminomethyl-3,5,5-trimethylcyclohexane (= isophorondiamine or IPDA), 2- and 4-methyl-1,3-diaminocyclohexane and mixtures thereof, 1,3- und 1,4-bis-(aminomethyl)-cyclohexane, 2,5(2,6)-bis-(aminomethyl)-bicyclo[2.2.1]heptane (NBDA), 3(4),8(9)-bis-(aminomethyl)-tricyclo[5.2.1.0^{2.6}]decane, 1,4-diamino-2,2,6-trimethylcyclohexane (TMCDA), 1,8-menthandiamine, 3,9-Bis-(3-aminopropyl)-2,4,8,10-tetraoxaspiro[5.5]undecane as well as 1,3- and 1,4-xylylendiamine; ether group containing aliphatic diamines, in particular bis-(2-aminoethyl)ether, 3,6-dioxaoctane-1,8-diamine, 4,7-dioxadecane-1-10-diamine, 4,7-dioxadecane-2,9-diamine, 4,9-dioxadodecane-1,12-diamine, 5,8-dioxadodecane-3,10-diamine, polyamines having secondary amino groups, especially those which are known as polyalkyleneamines, such as diethylenetriamine (DETA), dipropylenetriamine, bishexamethylenetriamine (BHMT), 3-(2-aminoethyl)aminopropylamine (N-3-amine).

Particularly preferred diprimary amines are those having a molecular weight of less than 200, in particular ethylene diamine, diethylene triamine, diethylene glycol diamine, 1,2-propylene diamine, 1,3-propylene glycol diamine, dipropylene diamine, 1,2-methyl-1,2-propanediamine, 2,2-dimethyl-1,3-propane diamine, 1,3-butan diamine, 1,4-butanediamine, 1,3-pentane diamine and 1,5-pentane diamine. The most preferred primary amine for use in the practice of the present invention is ethylene diamine.

It is further preferred, that the mass ratio of the primary amine moieties (NH₂) in the diprimary amine, to the total mass of the diprimary amine is at least 20%, preferably at least 25%, even more preferably at least 30% and most preferably at least 40%. The mass ratio, as this term is used here, is the ratio of the mass of the primary amine moieties (NH₂) to the total weight of the diprimary amine. E.g. ethylene diamine contains two NH₂-groups = 32 g/mol and has a total weight of 60 g/mol, so that the mass ratio of diprimary amine, with regard to the total mass of the diprimary amines is about 53 %.

In addition it is preferred that the diprimary amine comprises 2 to 12 atoms between the two amino functionalities, wherein not more than one of these atoms is nitrogen in form of a secondary NH.

For diprimary amines it is generally preferred that the ratio of active amine groups (NH₂+NH) to the number of atoms between the NH₂ end groups is not greater than 1/5. This ensures that shrinkage in the final network after two component application is substantially prevented.

The amount of the diprimary amine in the water reducible curing agent is preferably in the range of 2 to 40 % by weight, based on the total weight of the reaction product of diprimary amine(s), mono-primary amine(s) and polyepoxy compounds. Even more preferably, the amount of diprimary amine(s) is in the range of 5 to 35 wt.-%, in particular in the range of 10 to 30 wt.-% and most preferably 14 to 26 wt.-%.

With regard to the at least one mono-primary amine the present application is likewise not subject to any relevant restrictions. Suitable for use as mono-primary amines in the practice of the present application are the following amines:
- aliphatic, cycloaliphatic, acrylaliphatic mono-primary amines, especially methylamine, ethylamine, 1-propylamine, 2-propylamine, 1-butylamine, 2-butylamine, tert-butylamine, 3-methyl-1-butylamine, 3-methyl-2-butylamine, cyclopentylamine, hexylamine, cyclohexylamine, octylamine, 2-ethyl-1-hexylamine, benzylamine, 1- or 2-phenylethylamine, decylamine, dodecylamine, tetradecylamine, hexadecylamine, octadecylamine, eicosylamine, docosylamine, and fatty amines derived from natural fatty acid mixtures, for example cocoalkylamine, C₁₆-C₂₂-alkylamine, soyaalkylamine, oleylamine and tallowalkylamine, obtainable, for example, as Armeen® (from Akzo Nobel) or Rofamin® (from Ecogreen Oleochemicals) trade names. Especially suitable fatty amines are Armeen® 12D, Armeen® 18D, Armeen® CD, Armeen® HT, Armeen® M, Armeen® OD, Armeen® OVD and Armeen® TD, and Rofamin® KD, Rofamin® LD, Rofamin® STD, Rofamin® TD, Rofamin® TD, Rofamin® TD40, Rofamin® OD80, Rofamin® OD85 and Rofamin® OD90;
- aliphatic and cycloaliphatic or arylaliphatic mono-primary amines containing ether groups, especially 2-methoxy-ethylamine, 2-ethoxyethylamine, 3-methoxypropylamine, 3-ethoxypropylamine, 3-(2-ethyl-hexyloxy)propylamine, 3-(2-methoxyethoxy)propylamine, 2(4)methoxyphenyl-ethylamine;
- aliphatic, cycloaliphatic or arylaliphatic amines having one primary and at least one secondary amino group, especially N-methyl-1,2-ethanediamine, N-ethyl-1,2-ethanediamine, N-butyl-1,2-ethanediamine, N-hexyl-1,2-ethanediamine, N-butyl-1,6-hexanediamine, N-cyclohexyl-1,2-ethanediamine, 4-aminomethyl-piperidine, 3-(4-aminobutyl)piperidine, N-(2-amino-ethyl)piperazine (N-AEP), N-(2-amino-propyl)-piperazine, diamines from the cyanoethylation or cyanobutylation and subsequent hydrogenation of primary monoamines, for example N-methyl-1,3-propanediamine, N-ethyl-1,3-propanediamine, N-butyl-1,3-propanediamine, N-hexyl-1,3-propanediamine, N-(2-ethylhexyl)-1,3-propanediamine, N-dodecyl-1,3-propanediamine, N-cyclohexyl-1,3-propanediamine, 3-methylamino-1-pentylamine, 3-ethylamino-1-pentyl-amine, 3-butylamino-1-pentylamine, 3-hexylamino-1-pentylamine, 3-(2-ethylhexyl)amino-1-pentylamine, 3-dodecylamino-1-pentylamine, 3-cyclohexylamino-1-pentylamine, and additionally diamines obtainable by cyanoethylation and subsequent reduction of fatty amines, such as N-cocoalkyl-1,3-propanediamine, N-oleyl-1,3-propanediamine, N-soyaalkyl-1,3-propane-diamine, N-tallowalkyl-1,3-propanediamine or N-(C₁₆₋₂₂-alkyl)1,3-propanediamine, obtainable, for example, as Duomeen® CD, Duomeen® M, Duomeen® O, Duomeen® OV and Duomeen® T (Akzo Nobel), and additionally triamines derived from fatty amines, such as cocoalkyldipropylenetriamine, oleyldipropylenetriamine, and tallowalkyl-dipropylene-triamine, obtainable, for example, as Triameen® C, Triameen® OV, and Triameen® T (Akzo Nobel); mono-primary amines which in addition have secondary amino functionalities lead to a longer pot life without slowing down the cure of epoxy by the secondary amine groups on the curing agent.
- aliphatic, cycloaliphatic or arylaliphatic amines having one primary and at least one tertiary amino group, especially N,N-diethyl-1,2-ethanediamine, N,N-dimethyl-1,3-propanediamine, N,N-diethyl-1,3-propanediamine and N,N-diethyl-1,4-pentanediamine.

Preferred amines contain at least 2 carbon atoms, especially 3 to 15 carbon atoms, and optionally have either primary or secondary amino groups. In the practice of the present application, it is preferred, that the mono primary amine in addition to the primary amine contains one or more secondary amines. Preferred amines thus preferably contain 0 to 5 secondary amine functionalities, more preferably 1 to 4 secondary amine functionalities, and 0 to 1 hydroxy functionalities.

Particular preferred amines are aminoethyl ethanol amine, ethanol amine, N-ethyl ethylene diamine and N-ethanol-diethylene triamine. In the practice of the present application, aminoethylethanolamine is most preferably used as mono-primary amine.

The amount of the mono-primary amine in the water reducible curing agent is preferably in the range of 1 to 20 % by weight, based on the total weight of the reaction product of diprimary amine(s), mono-primary amine(s) and polyepoxy compounds. Even more preferably, the amount of diprimary amine(s) is in the range of 2 to 8 wt.-%, and most preferably 3 to 6 wt.-%.

For the water-reducible curing agent it is further preferred that the molar ratio of the at least one diprimary amine to the at least one mono-primary amine is at least 1:1, preferably at least 2:1 and most preferably at least 4:1. If more than one diprimary amines and/or more than one mono-primary amines are present in the composition, the mentioned molar ratios apply to the combined molar amounts of all diprimary amines and all mono-primary amines in the composition, respectively.

Generally, it is preferred in the present invention, that amines having a high number of functional amino groups, e.g. four or more amino groups, such as triethylene tetraamine and higher homologues thereof, are not included into the water-reducible curing agent for epoxy resins in substantial amounts. This means that that they should preferably be used as an ingredient for the preparation of the same in not more than 5% by weight, based on the total weight of the reaction product of diprimary amine(s), mono-primary amine(s) and polyepoxy compounds, preferably in not more than 2% by weight, and more preferably in not more than 1% by weight. It is particularly preferred, if such compounds are not present in the water-reducible curing agents in detectable amounts.

Further, it is preferred, that also polyoxyalkylenediamines with a molecular weight in excess of 500 are not present in the water-reducible curing agents in substantial amounts, which means, that preferably these compounds should not be present in the water-reducible curing agent in contents of more than 5% by weight, based on the total weight of the reaction product of diprimary amine(s), mono-primary amine(s) and polyepoxy compounds, preferably not more than 2% by weight, even more preferably not more than 1% by weight and most preferably they should not be present in the water-reducible curing agent in detectable quantities. More preferably, the water-reducible curing agent does not contain substantial amounts of polyoxyalkylenediamines with a molecular weight in excess of 200, wherein substantial amounts has the meaning as defined above.

The polyepoxide used as the third component for the preparation of the water-reducible curing agent for epoxy resins, preferably has an epoxy equivalent weight (EEW) of 65 to 500 g/eq. Polyepoxides can be prepared in a known manner, for example by oxidation of the corresponding olefines or by reacting epichlorhydrin with corresponding polyols, polyphenols or amines.

Especially suitable as polyepoxides are what are known as polyepoxide liquid resins, referred to hereinafter as "liquid resin". These materials have a glass transition temperature which is typically below 25°C. In contrast solid polyepoxide resins can be comminuted to powders, which are pourable at 25°C and have a glass transition temperature above 25°C. Polyepoxides which are known to the person skilled in the art as "reactive diluents" are also referred to in the present document as liquid resins.

In one embodiment, the polyepoxide is an aromatic polyepoxide. Suitable examples are liquid resins of the formula (I) 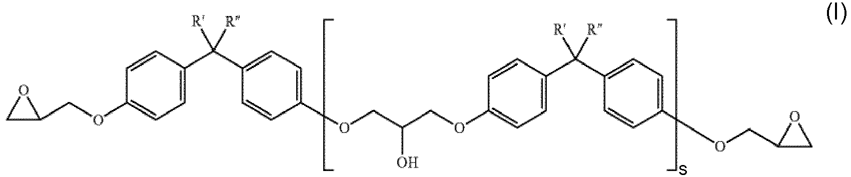 where R' and R" are each independently a hydrogen atom or a methyl group, and s has an average value of 0 to 1. Preference is given to those liquid resins of the formula (I) in which the index s has an average value of less than 0.2.

The liquid resins of the formula (I) are diglycidyl ethers of bisphenol A, bisphenol F and bisphenol A/F, where A represents acetone and F formaldehyde, which serve as reactants for preparation of these bisphenols. A bisphenol A liquid resin accordingly has methyl groups, a bisphenol F liquid resin hydrogen atoms, and a bisphenol A/F liquid resin both methyl groups and hydrogen atoms, as R' and R" in formula (I). In the case of bisphenol F, it is also possible for positional isomers to be present, especially derived from 2,4'- and 2,2'-hydroxyphenylmethane.

Such liquid resins are commercially available, for example as Araldite® GY 204, Araldite® GY 250, Araldite® GY 260, Araldite® GY 281, Araldite® GY 282, Araldite® GY 285, Araldite® PY 304, Araldite® PY 720 (from Huntsman); D.E.R.® 330, D.E.R.® 331, D.E.R.® 332, D.E.R.® 336, D.E.R.® 354, D.E.R.® 351, D.E.R.® 352, D.E.R.® 356 (from Dow); Epikote® 162, Epikote® 827, Epikote® 828, Epikote® 158, Epikote® 862, Epikote® 169, Epikote® 144, Epikote® 238, Epikote® 232, Epikote® 235 (from Hexion), Epalloy® 7190, Epalloy® 8220, Epalloy® 8230, Epalloy® 7138, Epalloy® 7170, Epalloy® 9237-70 (from CVC), Chem Res® E 20, Chem Res® E 30 (from Cognis), Beckopox® EP 116, Beckopox® EP 140 (from Cytec).

Further suitable aromatic polyepoxides are the glycidylization products of dihydroxybenzene derivatives such as resorcinol, hydroquinone and catechol; further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxy-phenyl)propane, 2,2-bis(4-hydroxy-3-tert-butyl-phenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenyl-ethane, 1,4-bis[2-(4-hydroxyphenyl)-2-propyl]benzene) (bisphenol P), 1,3-bis[2-(4-hydroxyphenyl)-2-propyl]benzene) (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl)ether, bis(4-hydroxyphenyl) sulfone; condensation products of phenols with formaldehyde, which are obtained under acidic conditions, such as phenol novolacs or cresol novolacs; aromatic amines, such as aniline, toluidine, 4-aminophenol, 4,4'-methylenediphenyldiamine (MDA), 4,4'-methylenediphenyldi(N-methyl)amine, 4,4'-[1,4-phenylenebis(1-methylethylidene)]bisaniline (bisaniline P), 4,4'-[1,3-phenylenebis(1-methylethylidene)]bisaniline (bisaniline M).

Commercially available epoxy novolacs are, for example, Araldite® EPN 1179, Araldite® GY 289, Araldite® PY 307-1 (from Huntsman), D.E.N.® 425 and D.E.N.® 431 (from Dow), Epalloy® 8240 and Erisys® RF50 (from CVC); a commercially available N,N-diglycidylaniline is, for example, Epikote® Resin 493 (from Hexion); a commercially available resorcinol diglycidyl ether is, for example, Erisys® RDGE (from CVC).

In a further embodiment, the polyepoxide is an aliphatic or cycloaliphatic polyepoxide, for example diglycidyl ether; a glycidyl ether of a saturated or unsaturated, branched or unbranched, cyclic or open-chain C₂ to C₃₀ diol, for example ethylene glycol, propylene glycol, butylene glycol, hexanediol, octanediol, a polypropylene glycol, dimethylolcyclohexane, neopentyl glycol; a glycidyl ether of a tri- or tetrafunctional, saturated or unsaturated, branched or unbranched, cyclic or open-chain polyol such as castor oil, trimethylolpropane, trimethylolethane, penta-erythritol, sorbitol or glycerol, and alkoxylated glycerol or alkoxylated trimethylolpropane; a hydrogenated bisphenol A, F or A/F liquid resin, or the glycidylization products of hydrogenated bisphenol A, F or A/F; an N-glycidyl derivative of amides or heterocyclic nitrogen bases, such as triglycidyl cyanurate and triglycidyl isocyanurate, and reaction products of epichlorohydrin and hydantoin.

Aliphatic or cycloaliphatic liquid resins are, for example, commercially available as Araldite® DY-C, Araldite® DY-F, Araldite® DY-H, Araldite® DY-T, Araldite® DY 0397, Araldite® DY 3601 (from Huntsman), D.E.R.® 732, D.E.R.® 736 (from Dow); Heloxy® BD, Heloxy® HD, Heloxy® TP, Epikote® 877 (from Hexion), Beckopox® EP 075 (from Cytec).

Mixtures of aliphatic or cycloaliphatic polyepoxides and aromatic epoxides of the formula (I) can also be used, such is in particular mixtures of diglycidyl ethers of bisphenol A, bisphenol F and bisphenol A/F and diglycidylethers of α,ω-alkandiols, wherein the α,ω-alkandiols preferably comprise 2 to 10 carbon atoms. Such mixtures are commercially available for example from Dow as D.E.R. 358.

In a further embodiment, the polyepoxide is a polyepoxide which has been prepared from the oxidation of olefins, for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

The polyepoxide is preferably a diepoxide A1.

The diepoxide A1 is more preferably selected from the group consisting of a bisphenol A, bisphenol F and bisphenol A/F diglycidyl ether having an epoxy equivalent weight of 156 to 250 g/eq, especially Araldite® GY 250, Araldite® PY 304, Araldite® GY 282 (from Huntsman); D.E.R.® 331, D.E.R.® 330 (from Dow); Epikote® 828, Epikote® 862 (from Hexion), N,N-diglycidylaniline and a polyglycol diglycidyl ether having an epoxy equivalent weight of 170 to 340 g/eq, especially D.E.R.® 732 and D.E.R.® 736 (from Dow). Further preferred is D.E.R.® 358 from Dow Chemical.

A particularly preferred diepoxide is 1,4-butane diglycidylether sold for example as Epiol DE-200 from HAJIN CHEMTECH and Grilonit RV 1806 from EMS-GrilTech.

In addition, polyalkylenglycol based di- or triepoxides may be used in admixture with the above-mentioned epoxides. Preferred polyalkylenglycol include polyalkylenglycol di- and triepoxides, which can be based on polyethylenglycol, polypropylenglycol or polyethylen/polypropylene mixed glycols. In a particularly preferred embodiment the polyalkylenglycol epoxides are polyalkylenglycol glycidyl ethers. A suitable polyalkylenglycol diepoxide is e.g. Erisys GE-24.

The polyalkylenglycols based epoxides are preferably included into the composition in 0 to 20 wt-% based on the total weight of the combined polyepoxy compounds. In a yet preferred embodiment, the polyalkyleneglycol based epoxides are present in 5 wt-% or less, preferably 2 wt-% or less and even more preferably 1 wt-% or less based on the total weight of the combined polyepoxy compound. Most preferably, polyalkylenglycol based epoxides are absent from the polyepoxy compound (i.e. they are present in about 0 wt-%).

The above mentioned diepoxides may contain up to 50 wt.-%, based on the respective weight of the diepoxide, of a monoepoxide, wherein only one of the two hydroxyl groups of the diepoxide precursor has been functionalized with epoxy. Preferably, the content of monoepoxide should be 30 wt.-% or less, more preferably 20 wt.-% or less, based on the weight of the diepoxide.

In the practice of the present application, it is particularly preferred if the polyepoxy compound comprises a mixture of at least one aromatic diepoxide and at least one aliphatic diepoxide. It is further preferred, if the aromatic diepoxide is derived from Bisphenol A, Bisphenol F or mixtures thereof, which are functionalized with glycidyl groups. As concerns the aliphatic diepoxide, it is preferred that this compound comprises one or more digylcidylethers of α,ω-alkandiols, preferably with 2 to 10 carbon atoms and more preferably 2 to 6 carbon atoms.

The amount of polyepoxide compound in the water reducible curing agent of the present application is not particularly limited. The combined polyepoxides should account however preferably for 30 to 90 wt.-%, more preferably for 40 to 85 wt.-% and most preferably for 50 to 80 wt.-%, based on the total weight of the reaction product of diprimary amine(s), mono-primary amine(s) and polyepoxy compounds.

A particularly preferred polyepoxide mixture comprises:
20-80 wt.-% Bisphenol A diglycidylether
0-50 wt.-% Bisphenol F diglycidylether,
0-20 wt.-% octandioldiglycidylether,
0-50 wt.-% hexandioldiglycidylether,
10-50 wt.-% butandioldiglycidylether and
0-20 wt.-% butandiolmonoglycidylether,
based on the total weight of the reaction product of diprimary amine(s), mono-primary amine(s) and polyepoxy compounds, respectively.

In the practice of the present application, it is conventional, that the curing agent is at least water-reducible which means that a homogeneous dispersion which does not separate upon storage into the different phases is formed in water, whereas the material does not dissolve.

The water-reducible curing agent according to the present invention may be formulated with further ingredients to provide a curing agent for epoxy formulations. Such additives include
- nonreactive diluents, solvents or film-forming assistants, such as toluene, xylene, methyl ethyl ketone, 2-ethoxyethanol, 2-ethoxyethyl acetate or benzyl alcohol, ethylene glycol, diethylene glycol butyl ether, dipropylene glycol butyl ether, ethylene glycol butyl ether, ethylene glycol phenyl ether, N-methylpyrrolidone, propylene glycol butyl ether, propylene glycol phenyl ether, bisphenols and phenol resins, diphenylmethane, diisopropylnaphthalene, mineral oil fractions, for example Solvesso® products (from Exxon), aromatic hydrocarbon resins, sebacates, phthalates, organic phosphoric and sulfonic esters and sulfonamides;
- reactive diluents and extenders, for example reactive diluents containing epoxy groups as already mentioned above, epoxidized soybean oil, butyrolactone, triphenyl phosphite, and additionally polyamides, polymers having carboxyl groups, isocyanates, silicones having reactive groups, polysulfides, butadiene-acrylonitrile copolymers and polyurethanes;
- polymers, for example polyamides, polysulfides, polyvinyl formal (PVF), polyvinyl butyral (PVB), polyurethanes (PUR), styrene-butadiene copolymers, homo- or copolymers of unsaturated monomers, especially from the group comprising ethylene, propylene, butylene, isobutylene, isoprene, vinyl acetate and alkyl(meth)acrylates, especially chlorosulfonated polyethylenes and fluorinated polymers, sulfonamide-modified melamines;
- thermoplastic polymers such as polyether sulfone, polyether imide and bitumen;
- inorganic and organic fillers, for example ground or precipitated calcium carbonates, which have optionally been coated with fatty acids, especially stearates, baryte (heavy spar), talcs, quartz flours, quartz sand, dolomites, wollastonites, kaolins, mica (potassium aluminum silicate), molecular sieves, aluminum oxides, aluminum hydroxides, silicas, cements, gypsums, fly ashes, carbon black, graphite, metal powders such as aluminum, copper, iron, silver or steel, PVC powders or hollow spheres;
- fibers, for example of polymer or glass;
- pigments, for example titanium dioxide or iron oxides;
- accelerators which accelerate the reaction between amino groups and epoxy groups, for example acids or compounds hydrolyzable to acids, for example organic carboxylic acids such as acetic acid, benzoic acid, salicylic acid, 2-nitrobenzoic acid, lactic acid, organic sulfonic acids such as methanesulfonic acid, p-toluenesulfonic acid or 4-dodecylbenzenesulfonic acid, sulfonic esters, other organic or inorganic acids, for example phosphoric acid, or mixtures of the aforementioned acids and acid esters; and also tertiary amines such as 1,4-diazabicyclo[2.2.2]octane, benzyldimethylamine, α-methylbenzyldimethylamine, 2-(dimethylaminomethyl)-phenol or 2,4,6-tris(dimethylaminomethyl)phenol, triethanolamine, dimethylaminopropylamine, salts of such tertiary amines, and quaternary ammonium salts, for example benzyltrimethylammonium chloride;
- rheology modifiers, such as especially thickeners, for example sheet silicates such as bentonites, derivatives of castor oil, hydrogenated castor oil, polyamides, polyurethanes, urea compounds, fumed silicas, cellulose ethers and hydrophobically modified polyoxyethylenes;
- adhesion improvers, for example organoalkoxysilanes such as 3-glycidoxypropyltrimethoxysilane, 3-amino-propyltrimethoxysilane, N-(2-aminoethyl)-3-amino-propyltrimethoxysilane, N-(2-aminoethyl)-N'-[3-(trimethoxysilyl)propyl]ethylenediamine, 3-ureido-propyltrimethoxysilane, 3-chloropropyltrimethoxysilane, vinyltrimethoxysilane, or the corresponding organoalkoxysilanes with ethoxy instead of the methoxy groups;
- heat, light or UV stabilizers;
- flame-retardant substances;
- surface-active substances, for example wetting agents, levelling agents, deaerating agents or defoamers;
- biocides, for example algaecides, fungicides or fungal growth inhibitors,
- thixotropic agents and defoamers.

A suitable defoamer for use in the practice of the present application is e.g. BYK® 1615 or BYK® 024 from BYK.

The above mentioned additives can be added to the curing agent, but may also be added to the composition to be cured by the curing agent prior to mixing with the curing agent. Preferably, the further additives are directly added to the curing agent.

The amount of further additives is not particularly limited, except that the curing agent still has to be present in an amount sufficient to provide curing. In particular, the further additives can be present in amounts of up to 90 wt.-%, based on the total weight of a curing agent comprising the water reducible curing agent, the further additives and water. More preferably the further additives are present in amounts of 10 to 85 wt.-% and most preferably in amounts of 30 to 80 wt.-%. In such compositions the water reducible curing agent preferably accounts for 2 to 50 wt.-%, more preferably 5 to 35 wt.-% and most preferably 8 to 20 wt.-%. Water preferably accounts for 5 to 70 wt%, more preferably 10 to 50 wt.-% of such compositions. All these wt.-%ages are based on the total weight of a curing agent comprising the water reducible curing agent, the further additives and water, but exclusive of the epoxy resin to be cured.

A particularly preferred mixture of the above mentioned additives comprises a thixotropic agent, one or more filler, a pigment and a defoamer.

A further aspect of the present application is directed to the use of a water-reducible curing agent as described above for the curing of epoxy resins, preferably as a curing agent for water-based epoxy resins and more preferably as a curing agent for self-levelling water-based epoxy resins.

Suitable epoxy resins are epoxy resins customary in epoxy chemistry such as for example
- the polyepoxides described above,
- a Bisphenol A, F or A/F solid resin which is of similar composition as that of the formula (I) specified for the polyepoxide, but wherein the index s is in the range of 2 to 12 and which has a glass transition temperature above 25°C.
- one of the epoxy resins mentioned which has been modified hydrophilically by the reactions at least one polyoxyalkylene polyol.

Preferred epoxy resins are based on Bisphenol A, F or A/F solid or liquid resins, as available commercially for example from Dow, Huntsman and Hexion.

The epoxy resin may comprise what is known as a reactive diluent. Suitable reactive diluents are mono- and polyepoxides, for example the glycidyl ethers of mono- or polyhydric phenols and aliphatic or cycloaliphatic alcohols, especially the polyglycidyl ethers of di- or polyols already mentioned as aliphatic or cycloaliphatic polyepoxides, and additionally especially phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, and glycidyl ethers of natural alcohols, for example C₈- to C₁₀-alkyl glycidyl ethers or C₁₂- to C₁₄-alkyl glycidyl ethers, commercially available as Erysis® GE-7 and Erysis® GE-8 (from CVC). The addition of a reactive diluent to the epoxy resin causes a reduction in the viscosity and - in the hardened state of the epoxy resin composition - a reduction in the glass transition temperature and in the mechanical values.

A further aspect of the present invention is a process for the preparation of a water-reducible curing agent comprising
- providing at least one diprimary amine and at least one mono-primary amine, wherein the molar ratio of the primary amines in the diprimary amine to secondary amines optional present in the diprimary amine is more than 1:1 and wherein the Molecular weight (Mw) of the diprimary amine is 500 or less.;
- adding at least one polyoxy compound to the amines, wherein the molar ratio of the primary amino groups to the epoxy groups employed in the reaction is in the range of about 1.7:1 to 1:1, and
- reacting the amine groups with the epoxy groups.

The reaction of the at least one diprimary amine, the at least one mono-primary amine and the at least one polyepoxy compound is preferably carried out at temperatures of about 20 to 150°C. For this purpose, the epoxy compounds should be added into the amine/water solution at a temperature of preferably between 40-70°C, during which water is added progressively. The benefit of such process is that better reaction selectivity is obtained at relatively low temperature for the reaction of primary amines over secondary amines, resulting in the formation of a linear adduct with minimal primary amine groups left. This is preferable over branched adducts having primary amine group. A product, which generates less secondary amine groups and more primary amine groups in the system could results in inferior pot life and leads to high shrinkage in two component epoxy formulations. Another advantage of the process is that no heating is required as the reaction enthalpy can maintain the batch temperature and allow for autocatalytic reaction to occur. Thus, energy is saved and production is made safer.

Yet another aspect of the present application is a process for coating a substrate, characterized in that a water-reducible curing agent as described above is mixed with an epoxy resin, applied to a surface of the substrate and cured.

Yet another aspect of the present application is a surface with an epoxy resin coating obtainable by the afore-mentioned process. The epoxy resin coating preferably is a non-cementious or cementious self-levelling floor or tile grout.

In the following, the present application invention is demonstrated by way of Examples, which however should not be considered as limiting to the present application.

### Example 1

41.38 kg of ethylene diamine and 10.34 kg of aminoethyl ethanolamine are charged into a reaction vessel pre-charged with 17 kg of water with agitation. At 50°C, 68.97 kg of D.E.R. 358 (from Dow Chemical) was charged over 90 minutes whilst the temperature is maintained between 55 and 65°C by controlling the rate of addition and cooling. Subsequently, 88.28 kg of Epiol DE-200 (from HAJIN CHEMTECH) is charged over 2 h whilst the temperature is maintained between 55 and 65°C, by controlling the rate of addition and cooling. Over the course of polyepoxide addition, a total of 137.03 kg of water is added to the reaction mixture. The batch is stirred for further 60 minutes before isolating of the pale clear liquid with a viscosity, as determined according to DIN 16945 (1989), of 4000 cp at 20°C.

The obtained material (10% by weight) was compounded with a defoamer (0,8 wt.-%), a pigment TiO₂ (3,8 wt.-%), Fillers (baryte and quartz; 13 wt.-% and 62 wt.-%, respectively), a thixotropic agent (0.4 wt.-%) and water (10 wt.-%). The material was cured by adding 9 wt.-% of an epoxy resin (D.E.R. 358). The properties of the resulting coating were determined and compared with a similar cured composition, which instead of the water-reducible curing agent described above contained a curing agent based on the reaction product of ethylene oxide with ammonia and an N-benzyl derivative thereof.

The results of these investigations are presented below.

**Table 1: 2k test results**

| | Comparative Example | Inventive Example | Remarks |
|---|---|---|---|
| Ease of mixing | Good | Easier | Better |
| Flow property | Good | Very good | Better |
| Pot life [main] | 25-35 | 45-55 | Better |
| 1-Day Shore D hardness | 45 | 52 | Match |
| 2-Day Shore D hardness | 56 | 60 | Match |
| 7-Day Shore D hardness | 70 | 70 | Match |
| Shrinkage (%) | 0.9 | 0.8 | Better |
| Odour | Ammoniacal | None | Better |
| VOC and plasticizer | 0 | 0 | Match |
| Appearance | Beige | lighter | Better |

The flow property was assessed by an empirical method by observing the self-levelling property and the recovery of levelling after the coating has been disturbed.

The pot life was determined in the same manner until the levelling of the paste could no longer be recovered after being disturbed.

The hardness was measured using a shore D durometer. The results were in shore D scale with no unit.

The shrinkage was obtained by measuring the length of a sample bar made in a W/D/H: 436/20/5 mm mould after 7 days.

Neither solvents nor plasticizers were used in the Inventive sample so that the VOC is zero. This was confirmed by a micro-chamber emission test according to AgBB/DIBt standard with a 2-K application formulation.

Further properties of the materials are described in the following Table 2.

**Table 2**

| | Comparative Example | Inventive Example | Remarks |
|---|---|---|---|
| Impact resistance [Nm] | Failure load | Failure load | Better |
| BS EN ISO 6271: 2011 | 6.9 (IR6) | 7.4 (IR7) | |
| Wear resistance [mm] | Wear depth | Wear depth | Better |
| BS EN 13892-4: 2002 | 0.033 (AR0.5) | 0.023 (AR0.5) | |
| Adhesion on concrete [MPa] | 1.3 with primer | 1.1 with primer | Similar(all substrate failure) |
| BS EN 13892-8: 2002 | 0.9 no primer | 1.1 no primer | |
| Compressive strength [MPa] | 21.5 | 26.7 | Better |
| BS EN 13892-8: 2002 | | | |
| Compressive modulus [mg.m⁻².h⁻¹] | 201 | 194 | Similar |
| BS 6391-6: 1994 | | | |
| Water vapour transmission [mg.m⁻².h⁻¹.Pa⁻¹] | 0 | 0,00036 | Better |
| BS EN 12086: 1997 | | | |

As can be taken from the above, the Inventive Example provides improved workability properties, a long pot life, and excellent finished properties such as impact resistance, water vapour transmission and compressive strength.

## Claims

1. A water-reducible curing agent for epoxy resins, obtainable by reacting at least one diprimary amine, at least one mono-primary amine and at least one polyepoxy compound, wherein the molar ratio of the primary amino groups to the epoxy groups in the reaction is in the range of about 1.7:1 to 1:1, the ratio of the primary amines in the diprimary amine to secondary amines optionally present in the diprimary amine is more than 1:1, and the molecular weight (Mw) of the diprimary amine is 500 Dalton or less.

2. Water-reducible curing agent according to claim 1, **characterized in that** the molar ratio of the primary amino groups to the epoxy groups in the reaction is about 1.5:1 or less, preferably about 1.4:1 or less.

3. Water-reducible curing agent according to claim 1 or 2, **characterized in that** the molar ratio of the at least one diprimary amine to the at least one mono-primary amine is at least 1:1, preferably at least 2:1 and most preferably at least 4:1.

4. Water-reducible curing agent according to anyone of claims 1 to 3, **characterized in that** the mass ratio of the primary amines in the diprimary amine, with regard to the molar mass of the diprimary amines is at least 20% or more.

5. Water-reducible curing agent according to anyone of the preceding claims, **characterized in that** the diprimary amine is selected from the group comprising of ethylene diamine, diethylene triamine, diethylene glycol diamine, 1,2-propylene diamine, 1,3-propylene glycol diamine, dipropylene diamine, 1,2-methyl-1,2-propanediamine, 2,2-dimethyl-1,3-propane diamine, 1,3-butan diamine, 1,4-butanediamine, 1,3-pentane diamine and 1,5-pentane diamine.

6. Water-reducible curing agent according to anyone of the preceding claims, **characterized in that** the mono-primary amine in addition contains one or more secondary amines.

7. Water-reducible curing agent according to anyone of the preceding claims, **characterized in that** the mono-primary amine is selected from the group comprising aminoethyl ethanol amine, ethanol amine, N-ethyl ethylene diamine and N-ethanol-diethylene triamine.

8. Water-reducible curing agent according to anyone of the preceding claims, **characterized in that** the polyepoxy compound comprises a mixture of at least one aromatic diepoxide and at least one aliphatic diepoxide.

9. Water-reducible curing agent according to claim 8, **characterized in that** the aromatic diepoxide is derived from bisphenol A, bisphenol F or mixtures thereof, which are functionalized with glycidyl groups.

10. Water-reducible curing agent according to claim 8 or 9, **characterized in that** the aliphatic diepoxide comprises one or more digylcidethers of α,ω-alkandiols, preferably with 2 to 10 carbon atoms.

11. Use of a water-reducible curing agent according to anyone of claims 1 to 10 as a curing agent for epoxy resins, preferably as a curing agent for water-based epoxy resins and more preferably as a curing agent for self-levelling water-based epoxy resins.

12. Process for the preparation of a water-reducible curing agent comprising
- providing at least one diprimary amine and at least one mono-primary amine, wherein the molar ratio of the primary amines in the diprimary amine to secondary amines optionally present in the diprimary amine is more than 1:1 and wherein and the molecular weight (Mw) of the diprimary amine is 500 or less;
- adding at least one polyepoxy compound to the amines, wherein the molar ratio of the primary amino groups to the epoxy groups employed in the reaction is in the range of about 1.7:1 to 1:1, and
- reacting the amine groups with the epoxy groups.

13. Process for coating a substrate, **characterized in that** a water-reducible curing agent according to anyone of claims 1 to 10 is mixed with an epoxy resin, applied to a surface of the substrate and cured.

14. Substrate with an epoxy resin coating obtainable by a process according to claim 13.

## Patentansprüche

1. Wasserverdünnbares Härtungsmittel für Epoxidharze, erhältlich durch Umsetzung von mindestens einem diprimären Amin, mindestens einem monoprimären Amin und mindestens einer Polyepoxidverbindung, wobei das Molverhältnis der primären Aminogruppen zu den Epoxidgruppen bei der Umsetzung im Bereich von etwa 1,7:1 bis 1:1 liegt, das Verhältnis der primären Amine in dem diprimären Amin zu gegebenenfalls in dem diprimären Amin vorliegenden sekundären Aminen mehr als 1:1 beträgt und das Molekulargewicht (Mw) des diprimären Amins 500 Dalton oder weniger beträgt.

2. Wasserverdünnbares Härtungsmittel nach Anspruch 1, **dadurch gekennzeichnet, dass** das Molverhältnis der primären Aminogruppen zu den Epoxidgruppen bei der Umsetzung etwa 1,5:1 oder weniger, vorzugsweise etwa 1,4:1 oder weniger, beträgt.

3. Wasserverdünnbares Härtungsmittel nach Anspruch 1 oder 2, **dadurch gekennzeichnet, dass** das Molverhältnis des mindestens einen diprimären Amins zu dem mindestens einen monoprimären Amin mindestens 1:1, vorzugsweise mindestens 2:1 und ganz besonders bevorzugt mindestens 4:1 beträgt.

4. Wasserverdünnbares Härtungsmittel nach einem der Ansprüche 1 bis 3, **dadurch gekennzeichnet, dass** das Massenverhältnis der primären Amine in dem diprimären Amin in Bezug auf die Molmasse der diprimären Amine mindestens 20% oder mehr beträgt.

5. Wasserverdünnbares Härtungsmittel nach einem der vorhergehenden Ansprüche, **dadurch gekennzeichnet, dass** das diprimäre Amin aus der Gruppe umfassend Ethylendiamin, Diethylentriamin, Diethylenglykoldiamin, 1,2-Propylendiamin, 1,3-Propylenglykoldiamin, Dipropylendiamin, 1,2-Methyl-1,2-propan-diamin, 2,2-Dimethyl-1,3-propandiamin, 1,3-Butandiamin, 1,4-Butandiamin, 1,3-Pentandiamin und 1,5-Pentandiamin ausgewählt ist.

6. Wasserverdünnbares Härtungsmittel nach einem der vorhergehenden Ansprüche, **dadurch gekennzeichnet, dass** das monoprimäre Amin zusätzlich ein oder mehrere sekundäre Amine enthält.

7. Wasserverdünnbares Härtungsmittel nach einem der vorhergehenden Ansprüche, **dadurch gekennzeichnet, dass** das monoprimäre Amin aus der Gruppe umfassend Aminoethylethanolamin, Ethanolamin, N-Ethylethylendiamin und N-Ethanoldiethylentriamin ausgewählt ist.

8. Wasserverdünnbares Härtungsmittel nach einem der vorhergehenden Ansprüche, **dadurch gekennzeichnet, dass** die Polyepoxidverbindung eine Mischung von mindestens einem aromatischen Diepoxid und mindestens einem aliphatischen Diepoxid umfasst.

9. Wasserverdünnbares Härtungsmittel nach Anspruch 8, **dadurch gekennzeichnet, dass** sich das aromatische Diepoxid von Bisphenol A, Bisphenol F oder Mischungen davon, die mit Glycidylgruppen funktionalisiert sind, ableitet.

10. Wasserverdünnbares Härtungsmittel nach Anspruch 8 oder 9, **dadurch gekennzeichnet, dass** das aliphatische Diepoxid einen oder mehrere Diglycidylether von α,ω-Alkandiolen, vorzugsweise mit 2 bis 10 Kohlenstoffatomen, umfasst.

11. Verwendung eines wasserverdünnbaren Härtungsmittels nach einem der Ansprüche 1 bis 10 als Härtungsmittel für Epoxidharze, vorzugsweise als Härtungsmittel für wasserbasierte Epoxidharze und weiter bevorzugt als Härtungsmittel für selbstverlaufende wasserbasierte Epoxidharze.

12. Verfahren zur Herstellung eines wasserverdünnbaren Härtungsmittels, bei dem man
- mindestens ein diprimäres Amin und mindestens ein monoprimäres Amin bereitstellt, wobei das Verhältnis der primären Amine in dem diprimären Amin zu gegebenenfalls in dem diprimären Amin vorliegenden sekundären Aminen mehr als 1:1 beträgt und wobei das Molekulargewicht (Mw) des diprimären Amins 500 Dalton oder weniger beträgt,
- mindestens eine Polyepoxidverbindung zu den Aminen gibt, wobei das Molverhältnis der primären Aminogruppen zu den Epoxidgruppen, die bei der Umsetzung eingesetzt werden, im Bereich von etwa 1,7:1 bis 1:1 liegt, und
- die Amingruppen mit den Epoxidgruppen umsetzt.

13. Verfahren zum Beschichten eines Substrats, **dadurch gekennzeichnet, dass** man ein wasserverdünnbares Härtungsmittel nach einem der Ansprüche 1 bis 10 mit einem Epoxidharz mischt, auf die Oberfläche des Substrats aufbringt und härtet.

14. Substrat mit einer Epoxidharzbeschichtung, die nach einem Verfahren nach Anspruch 13 erhältlich ist.

## Revendications

1. Agent durcisseur diluable à l'eau pour des résines époxydes, pouvant être obtenu par réaction d'au moins une amine à deux groupes primaires, d'au moins une amine à un seul groupe primaire et d'au moins un composé à plusieurs groupes époxy, le rapport molaire des groupes amino primaires aux groupes époxy dans la réaction étant dans la plage d'environ 1,7:1 à 1:1, le rapport des amines primaires dans l'amine à deux groupes primaires aux amines secondaires éventuellement présentes dans l'amine à deux groupes primaires étant supérieur à 1:1 et la masse moléculaire (Mw) de l'amine à deux groupes primaires étant inférieure ou égale à 500 Daltons.

2. Agent durcisseur diluable à l'eau selon la revendication 1, **caractérisé en ce que** le rapport molaire des groupes amino primaires aux groupes époxy dans la réaction est inférieur ou égal à environ 1,5:1, de préférence inférieur ou égal à environ 1,4:1.

3. Agent durcisseur diluable à l'eau selon la revendication 1 ou 2, **caractérisé en ce que** le rapport molaire de l'au moins une amine à deux groupes primaires à l'au moins une amine à un seul groupe primaire est d'au moins 1:1, de préférence d'au moins 2:1 et de préférence par-dessus tout d'au moins 4:1.

4. Agent durcisseur diluable à l'eau selon l'une quelconque des revendications 1 à 3, **caractérisé en ce que** la proportion massique des amines primaires dans l'amine à deux groupes primaires, par rapport à la masse molaire des amines à deux groupes primaires est supérieure ou égale à au moins 20 %.

5. Agent durcisseur diluable à l'eau selon l'une quelconque des revendications précédentes, **caractérisé en ce que** l'amine à deux groupes primaires est choisie dans le groupe constitué par l'éthylènediamine, la diéthylènetriamine, la diéthylèneglycoldiamine, la propylène-1,2-diamine, la propylèneglycol-1,3-diamine, la dipropylènediamine, la 1,2-méthylpropane-1,2-diamine, la 2,2-diméthylpropane-1,3-diamine, la butane-1,3-diamine, la butane-1,4-diamine, la pentane-1,3-diamine et la pentane-1,5-diamine.

6. Agent durcisseur diluable à l'eau selon l'une quelconque des revendications précédentes, **caractérisé en ce que** l'amine à un seul groupe primaire contient de plus une ou plusieurs amines secondaires.

7. Agent durcisseur diluable à l'eau selon l'une quelconque des revendications précédentes, **caractérisé en ce que** l'amine à un seul groupe primaire est choisie dans le groupe comprenant l'aminoéthyléthanolamine, l'éthanolamine, la *N*-éthyléthylènediamine et la *N-*éthanoldiéthylènetriamine.

8. Agent durcisseur diluable à l'eau selon l'une quelconque des revendications précédentes, **caractérisé en ce que** le composé à plusieurs groupes époxy comprend un mélange d'au moins un diépoxyde aromatique et d'au moins un diépoxyde aliphatique.

9. Agent durcisseur diluable à l'eau selon la revendication 8, **caractérisé en ce que** le diépoxyde aromatique est dérivé de bisphénol A, de bisphénol F ou de mélanges de ceux-ci, qui sont fonctionnalisés avec des groupes glycidyle.

10. Agent durcisseur diluable à l'eau selon la revendication 8 ou 9, **caractérisé en ce que** le diépoxyde aliphatique comprend un ou plusieurs éthers de diglycidyle d'alcane-α,ω-diols, de préférence ayant 2 à 10 atomes de carbone.

11. Utilisation d'un agent durcisseur diluable à l'eau selon l'une quelconque des revendications 1 à 10 en tant qu'agent durcisseur pour des résines époxydes, de préférence en tant qu'agent durcisseur pour des résines époxydes à base d'eau et de préférence encore en tant qu'agent durcisseur pour des résines époxydes à base d'eau autolissantes.

12. Procédé pour la préparation d'un agent durcisseur diluable à l'eau comprenant
- la fourniture d'au moins une amine à deux groupes primaires et d'au moins une amine à un seul groupe primaire, le rapport molaire des amines primaires dans l'amine à deux groupes primaires aux amines secondaires éventuellement présentes dans l'amine à deux groupes primaires étant supérieur à 1:1 et la masse moléculaire (Mw) de l'amine à deux groupes primaires étant inférieure ou égale à 500 ;
- l'ajout d'au moins un composé à plusieurs groupes époxy aux amines, le rapport molaire des groupes amino primaires aux groupes époxy employés dans la réaction étant dans la plage d'environ 1,7:1 à 1:1, et
- la réaction des groupes amine avec les groupes époxy.

13. Procédé pour le revêtement d'un substrat, **caractérisé en ce qu'**un agent durcisseur diluable à l'eau selon l'une quelconque des revendications 1 à 10 est mélangé avec une résine époxyde, appliqué sur une surface du substrat et durci.

14. Substrat portant un revêtement de résine époxyde pouvant être obtenu par un procédé selon la revendication 13.
